# EUROPEAN PATENT SPECIFICATION

(11) **EP 0 371 726 B1**
(45) Date of publication and mention of the grant of the patent: **20.03.1996**
(21) Application number: 89312287.9
(22) Date of filing: 27.11.1989
(51) Int. Cl.: H04N 1/32

(54) **Facsimile telegraph**
Faksimile-Telegraph
Fac-similé télégraphique

(30) Priority: 28.11.1988 JP 301857/88
(43) Date of publication of application: 06.06.1990
(73) Proprietor: SHARP KABUSHIKI KAISHA, Osaka 545 (JP)
(72) Inventor: Kotani, Matahira, Ikoma-gun Nara-ken (JP)
(74) Representative: Brown, Kenneth Richard

(56) References cited:
- DE-A- 3 306 706
- DE-A- 3 507 479
- DE-A- 3 733 650
- GB-A- 2 162 407
- GB-A- 2 166 620
- GB-A- 2 172 479
- US-A- 4 490 746
- REVIEW OF THE ELECTRICAL COMMUNICATION LABORATORIES, vol. 33, no. 1, January 1985, pages 1-12; M. TANBARA et al.: "FICS-2 software system and signaling interface"
- IDEM

## Description

### BACKGROUND OF THE INVENTION

### 1. Field of the Invention

The present invention relates to a facsimile telegraph, and more particularly, to an improved facsimile telegraph having a so-called automatic answering function.

### 2. Description of the Related Art

Facsimile telegraphs having a facsimile image information relaying/transferring function have memories for temporarily storing facsimile image information received by them. Such facsimile telegraphs are capable of transmitting the facsimile image information once received therein to other secondary machines in accordance with a relaying/transferring instruction sent from a primary machine.

In a conventional facsimile transmitting system, a primary machine directs one of secondary machines which serves as a relaying machine to forward a facsimile image information to a designated secondary machine, thereby finally transmitting the facsimile image information to the designated secondary machine.

Hence, the facsimile image information is transferred through such a relaying machine, the information can be transferred only among the preselected facsimile machines, and cannot be relayed or transferred to an arbitrary secondary machine.

Further, the secondary machines which are to receive the information through the relaying machine cannot choose desired facsimile image information, and the relaying machine transmits all the facsimile image information to the designated secondary machines. Furthermore, in the above-described facsimile system, although the facsimile image information can be temporarily stored in the memory by means of its automatic reception function while the user is out, the user can be informed at the place where he has gone of neither reception of the facsimile image information by the facsimile telegraph nor the contents of the information received.

DE-A-3306706 discloses a relaying type facsimile machine in which facsimile data is transmitted to a remote station only if an identification code sent by the transmitting facsimile matches an identification code stored in the receiving facsimile. This arrangement prevents the unauthorised relaying of facsimile data to remote facsimile terminals.

### SUMMARY OF THE INVENTION

An object of the present invention is to provide a facsimile telegraph which enables a user to be informed through a transmission line of whether or not facsimile image information has been received by the facsimile telegraph at the place where he has gone, and enables the user to obtain this facsimile image information by means of another facsimile telegraph at that place.

There is thus provided an automatic answering station comprising: image information storage means for storing image information transmitted from each of a plurality of calling stations through a transmission network; identification data storage means for storing identification data assigned to each of a plurality of remote stations; comparing means for comparing identification data transmitted from one of a plurality of said remote stations with said stored identification data; and output means for outputting said stored image information to said one of a plurality of said remote stations when said comparing means detects that identification data received from said one of said plurality of remote stations matches identification data stored in said identification data storage means;
characterised by informing means for informing one of said plurality of remote stations of the presence of stored image information by transmitting a predetermined signal when a predetermined calling signal is received from said one of a plurality of said remote stations and a list storage means for storing a list of transmitted data from a plurality of said calling stations and wherein said output means outputs said list to said one of a plurality of remote stations when said one of a plurality of remote stations transmits a predetermined signal.

With such a facsimile telegraph a user can be informed of whether or not facsimile image information has been automatically received by the facsimile telegraph while he is out. Also, when facsimile image information has been automatically received, the user can transfer the facsimile image information automatically received to another facsimile telegraph by inputting identification data.

Preferably the image information storage means is a partitioned data storage means for storing image information transmitted from one of the plurality of calling stations in one of the partitioned data areas, and the output means outputs the partitioned data to another facsimile telegraph when a predetermined signal is received from another facsimile telegraph.

With such a facsimile telegraph, a user can transfer initial portions of a plurality of facsimile image information automatically received to another facsimile telegraph.

Further, means may be provided, responsive to a signal from a remote station designating particular partitioned data, to output selected partitioned data to the remote station.

With such a facsimile telegraph, the user can transfer the beginnings of a plurality of facsimile image information files which have been automatically received to another facsimile telegraph. Also, the user can choose a desired facsimile image information by referring to these beginnings.

Further objects and advantages of the present invention will be apparent from the following description of the preferred embodiment of the invention as illustrated in the accompanying drawings.

### BRIEF DESCRIPTION OF THE DRAWINGS

Fig. 1 is a block diagram of a facsimile telegraph according to the present invention;
Fig. 2 is a block diagram for explaining the transmission among facsimile telegraphs;
Fig. 3 shows an example of a fax reception list;
Fig. 4 is a block diagram showing details of a main control unit 5 and an image signal storage unit 7 of the facsimile telegraph of Fig. 1;
Fig. 5 is a block diagram showing details of a network control unit 4 and a telephone function unit 17 in the facsimile telegraph of Fig. 1;
Fig. 6 is a time table of a facsimile reception operation;
Fig. 7 shows a protocol between an automatic answering station 1 and a calling station 1A;
Fig. 8 shows a protocol between a remote station 1B and the automatic answering station 1;
Fig. 9 shows an example of a polling procedure;
Figs. 10 (a) and (b) show examples of polling permission codes;
Figs. 11 (a), 11 (b) and 11 (c) are flowcharts for explaining the operation of the facsimile telegraph according to the present invention;
Fig. 12 shows another example of the fax reception list.

### DETAILED DESCRIPTION OF THE PREFERRED EMBODIMENT

An embodiment of the present invention will be described below on the assumption that facsimile image information which is transmitted from a facsimile telegraph 1A (hereinafter referred to as a calling station) is automatically received by a facsimile telegraph 1 according to the present invention (hereinafter referred to as an automatic answering station), which is connected to the calling station 1A through a public transmission circuit network 2 and set to the so called automatic answering mode which is described later, and that another facsimile telegraph (hereinafter referred to as a remote station) 1B calls the automatic answering station 1 causing it to transmit the facsimile image information received therein to the remote station 1B.

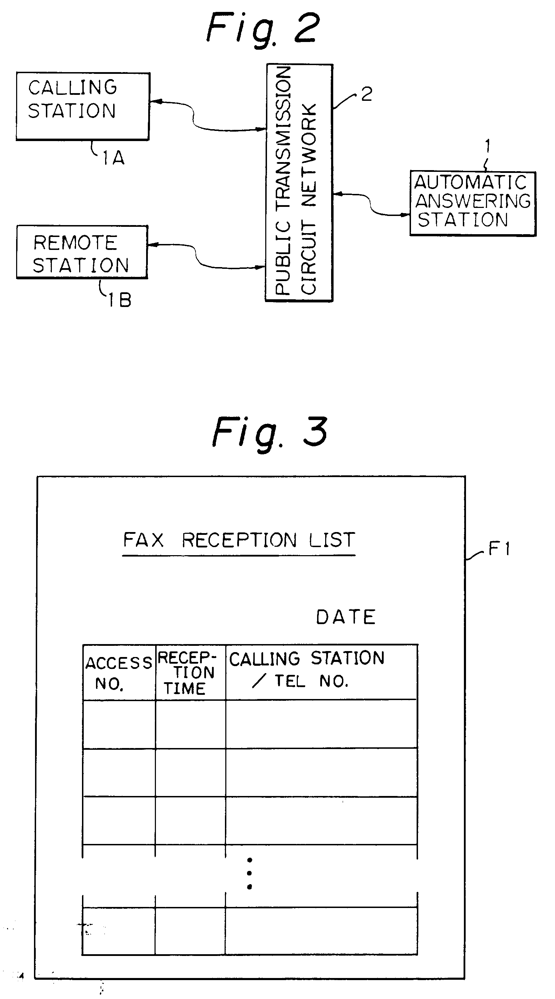

The automatic answering station 1 automatically receives facsimile image information sent from the calling station 1A, and stores it in a later-described image signal storage unit. The automatic answering station 1, which is set to the automatic answering mode, is capable of receiving and storing in sequence the facsimile image information sent from a plurality of calling stations, including the calling station 1A. In the automatic answering station 1, individual facsimile image information is stored in the form of, for example, a Fax Reception List F1 shown in Fig. 3, together with an access No. and identification data which identifies reception time and the calling station.

The remote station 1B is capable of calling the automatic answering station 1 through the public transmission circuit network 2 to receive the Fax Reception List F1 . Therefore, an operator of the remote station 1B can obtain the contents of the list F1 by printing them out at the remote station 1B. After referring to the list F1 , the operator can obtain a desired facsimile image information stored in the automatic answering station 1 by designating its access No.

Thus, the present invention achieves the so-called automatic answering function with which the user can be informed of the reception of facsimile information by a facsimile telegraph (the automatic answering station 1 in this embodiment) and of the contents of that facsimile information by means of other facsimile telegraph (the remote station 1B in this embodiment).

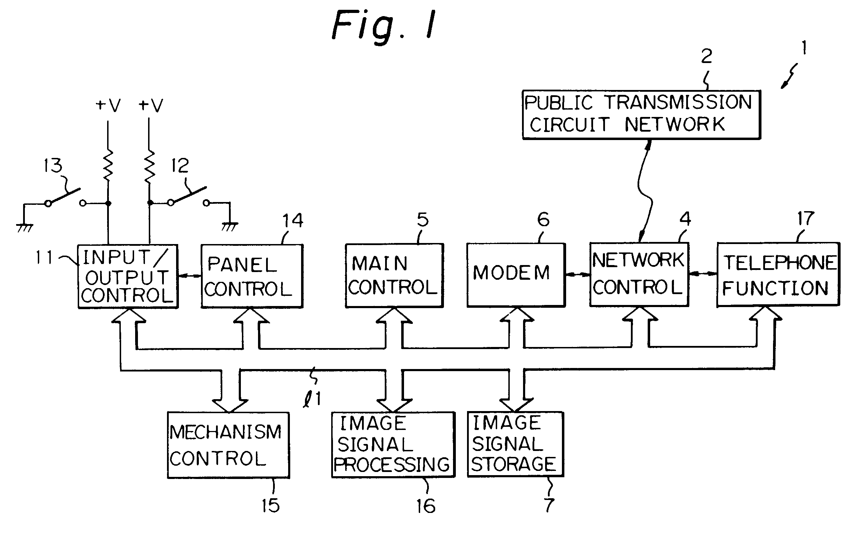

The structure of the facsimile telegraph 1 referred to as the automatic answering station in the above will now be described in detail with reference to Fig. 1.

The facsimile telegraph 1 is connected to the public transmission circuit network 2 through a network control unit 4. A main control unit 5, which controls the overall operation of the facsimile telegraph 1, decodes the facsimile image information received by the network control unit 4 by means of a MODEM unit 6 and temporarily stores the decoded signal in an image signal storage unit 7, which is comprised of a random access memory (RAM). The network control unit 4, the main control unit 5, the MODEM unit 6 and the image signal storage unit 7 are respectively connected in parallel to a bus line ℓ1.

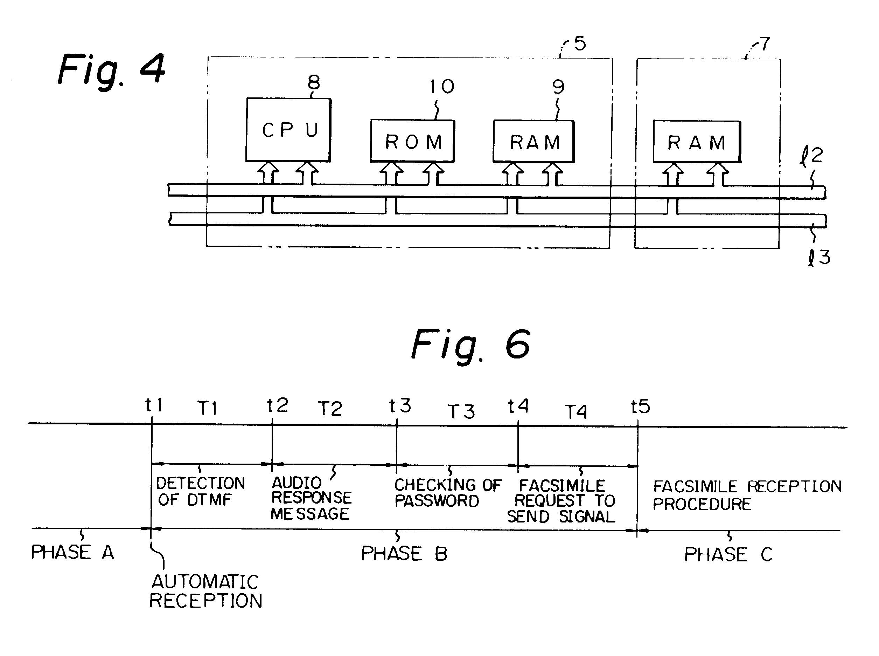

Fig. 4 is a block diagram of the main control unit 5 and the image signal storage unit 7. The main control unit 5 includes a central processing unit (CPU) 8, a RAM 9 for storing various control signals, including a transmitting station identification (TSI) signal and so on sent from other facsimile telegraph in a communication phase (phase B) followed by a reception phase (phase C) in which facsimile image information is received, and a read only memory ROM 10 for storing a transmitting station identification signal and so on which are assigned to the facsimile telegraph 1. These components of the main control unit 5 are connected in parallel to a data bus ℓ2 and an address bus ℓ3 constituting the bus line ℓ1. The data bus ℓ2 and the address bus ℓ3 are also connected in parallel to a random access memory which constitutes the image information storage unit 7.

Turning again to Fig. 1, an input/output control unit 11 has an automatic/manual reception mode change-over switch 12 and an automatic answering/normal mode switch-over switch 13.

A panel control unit 14 for controlling an operation panel (not shown), a mechanism control unit 15 for controlling the operation of a printing mechanism (not shown) and so on, an image signal processing unit 16 and a telephone function unit 17 are also connected in parallel to the bus line ℓ1.

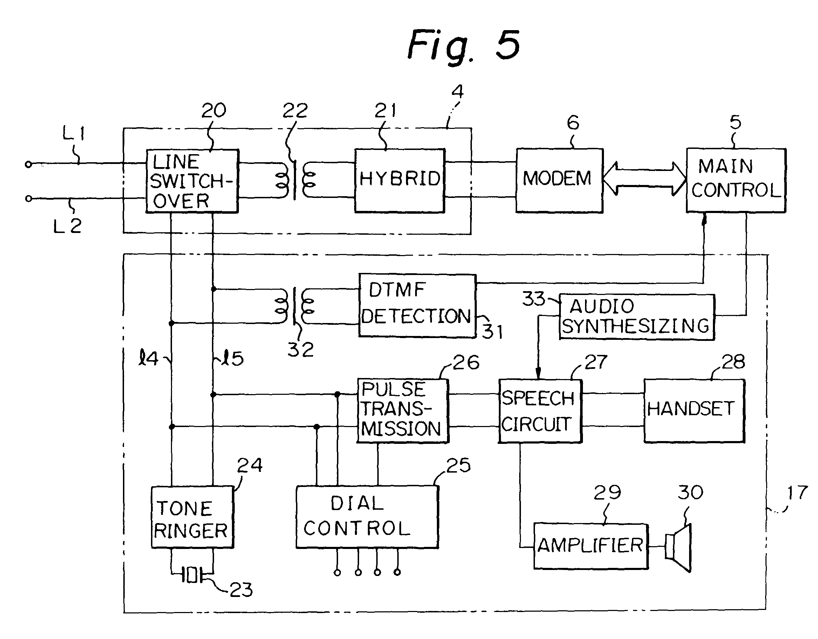

Fig. 5 is a block diagram of the network control unit 4 and the telephone function unit 17. The network control unit 4 includes a line switch-over unit 20 to which communication lines L1 and L2 from the public transmission circuit network 2 are connected, and a hybrid unit 21 connected to the MODEM unit 6. The line switch-over unit 20 and the hybrid unit 21 are connected each other through a transformer 22. In the telephone function unit 17, a tone ringer unit 24 having a piezo-electric buzzer 23 is connected to the line change-over unit 20 through lines ℓ4 and ℓ5. To the lines ℓ4 and ℓ5 are also connected a pulse transmitting unit 26 for transmitting dialling signal from a dial control unit 25, a speech circuit unit 27, and a handset 28. An amplifier 29 and a speaker 30 are connected to the speech circuit unit 27.

A tone signal detecting unit 31 for detecting a dial tone multi-frequency signal (DTMF) received through the communication lines L1 and L2 is also connected to the lines ℓ4 and ℓ5 through a transformer 32. The output of the tone signal detecting unit 31 is given to the main control unit 5. When a prescribed signal is detected by the tone signal detecting unit 31, the main control unit 5 sends out a message representing, for example, the presence or absence of the facsimile image information received, through an audio synthesizing unit 33 provided in the telephone function unit 17.

The operation of the automatic answering station 1 at the time of automatically receiving facsimile image information sent from the calling station 1A will be described below.

In the automatic reception mode, a calling signal (CI signal) transmitted from the calling station 1A is detected by the network control unit 4 of the automatic answering station 1. The station 1 is turned on when this calling signal is inputted into the input/output control unit 11. Whereby, the main control unit 5 starts to exchange data with the panel control unit 14, control the MODEM unit 6, and exchange facsimile procedure signals (phase B) which are described later.

Entering on a phase for receiving the facsimile image signal (phase C), the facsimile image signal from the MODEM 6 is temporarily stored in the image signal storage unit 7. The facsimile image signal stored in the image signal storage unit 7 is decoded by the image signal processing unit 16, thereby reproducing a facsimile image. The reproduced image signal is transferred to the mechanism control unit 15 by the direct memory access (DMA) method where parallel/series conversion processing is conducted on the image signal, and the converted facsimile image is printed out by means of a thermal head (not shown) or the like.

In a case where the station 1 is set to the automatic answering mode, the facsimile image information received may be stored in the image signal storage unit 7 as well as printed out on a paper. Alternatively, it may be only stored in the image signal storage unit 7 without printing out on the paper.

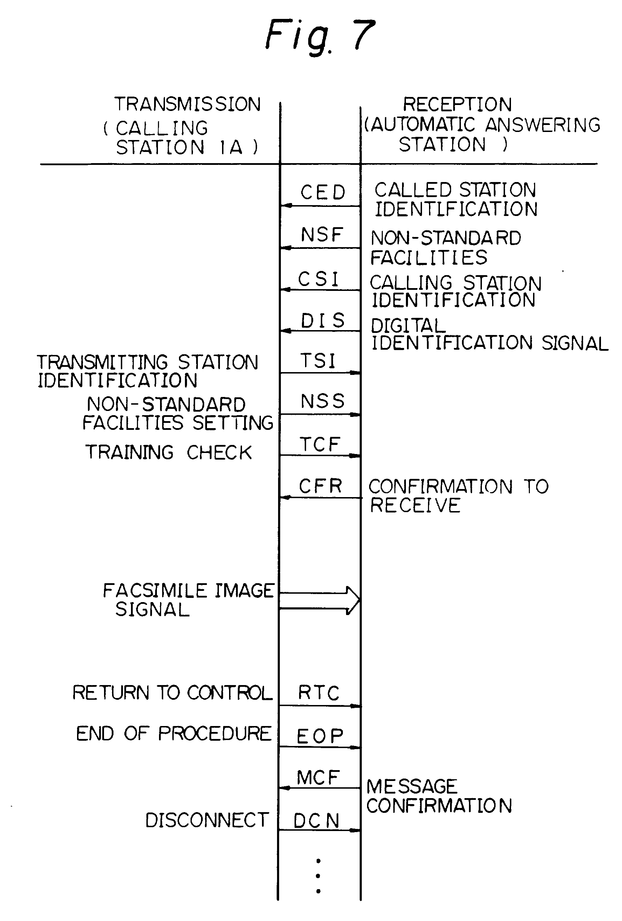

Fig. 6 is a time table of the operation of the automatic answering station 1 in a case where it receives a calling signal from the remote station 1B. Here, it is assumed that the station 1 is set to the automatic answering mode and the automatic reception mode.

Once the station 1 automatically receives a calling signal (CI signal) from the remote station 1B at time t1 (phase A), a dial tone multi-frequency signal (DTMF) is detected in a period T1 from time t1 to time t2. When a prescribed key, e.g., "5" key or "*" key, used for dialling is pressed on the remote station's side, a dial tone signal corresponding to the pressed key is detected by the tone signal detecting unit 31 of the automatic answering station 1 in this period T1. Once this dial tone signal is detected, a predetermined audio response message is sent out from the automatic answering station 1 to the remote station 1B in a period T2 from time t2 to time t3.

That is, when the dial tone signal is detected, it is confirmed whether or not the automatic answering station 1 has received facsimile image signal from other facsimile telegraphs. This confirmation may be made by checking the contents of the image signal storage unit 7. After this confirmation, the audio response message representing presence or absence of the facsimile image signal is sent out from the automatic answering station 1 to the remote station 1B through the audio synthesizing unit 33.

In a case where the facsimile image signal has been received, an audio response message requiring an input of an identification number (ID number) is sent to the remote station 1B. Once the ID number is inputted on the remote station IB's side in response to this message, the ID number is collated with that registered in advance in the automatic answering station 1 in a period T3 from time t3 to time t4. If the ID number coincides with the number registered, a reception response signal or a facsimile transmission request signal from the remote station 1B, which are described later, is received in a period T4 from time t4 to time t5. At time 5, facsimile image signal is sent out to the remote station 1B (phase C). In general, since ID numbers individually registered in facsimile telegraphs are exchanged with each other, the ID number confirmation period T3 may be omitted.

Fig. 7 illustrates a typical protocol at the time of receiving a facsimile image signal. When the calling signal CI transmitted from the calling station 1A is detected by the automatic answering station 1, thereby entering on the phase B, four response signals, that is, a called station identification (CED) signal, a non-standard facilities (NSF) signal, a calling station identification (CSI) signal and a digital identification (DIS) signal, are sent out from the station 1 to the calling station 1A in this order. In response to these signals, a transmitting station identification (TSI) signal, a non-standard facilities setting (NSS) signal, and a training check (TCF) signal are sent out from the calling station 1A to the automatic answering station 1. Upon receipt of these signals, the automatic answering station 1 sends out a confirmation to receive (CFR) signal, and phase B is thereby completed. In phase C which follows phase B, the facsimile image signal is transmitted from the calling station 1A to the automatic answering station 1. Thereafter, in phase D, a return to control (RTC) signal and an end of procedure (EOP) signal are sent out from the calling station 1A. In response to this, a message confirmation (MCF) signal is sent out from the station 1, and a disconnect (DCN) signal is sent out from the calling station 1A, thereby completing phase D and proceeding to phase E.

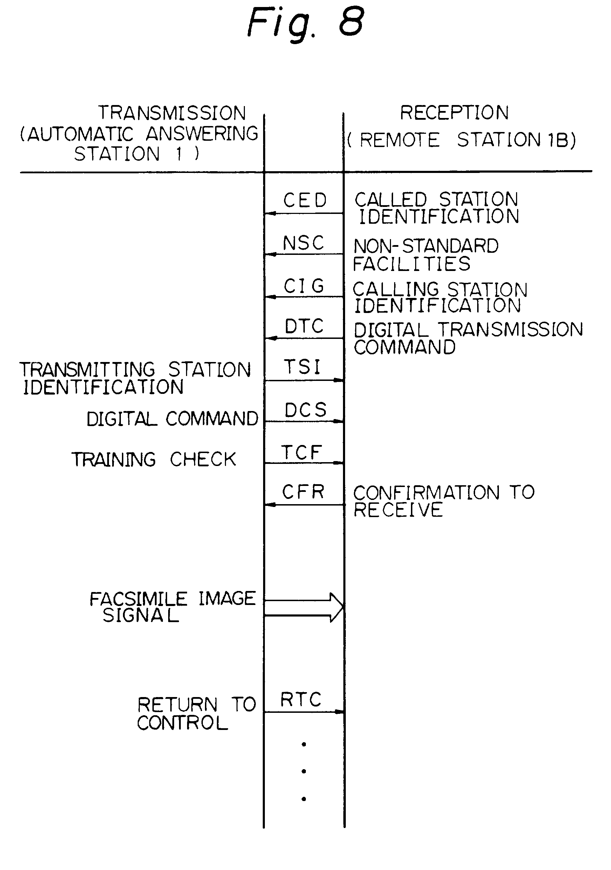

Fig. 8 illustrates the protocol of receiving polling of facsimile image information in a case where the facsimile image information stored in the automatic answering station 1 is forwarded to the remote station 1B. In phase B, reception response signals, including a called station identification (CED) signal, a non-standard facilities command (NSC) signal, a calling station identification (CIG) signal and a digital transmission command (DTC) signal, are sent out from the remote station 1B to the automatic answering station 1 in this order. In response to these signals, a transmitting station identification (TSI) signal, a digital command (DCS) signal and a training check (TCF) signal are sent out from the station 1. Thereafter, a confirmation to receive (CFR) signal is sent out from the remote station 1B, and phase B is thereby completed. In phase C, a facsimile image signal is transmitted from the automatic answering station 1 to the remote station 1B. Thereafter, in phase D, a return to control (RTC) signal and so on are sent out sequentially.

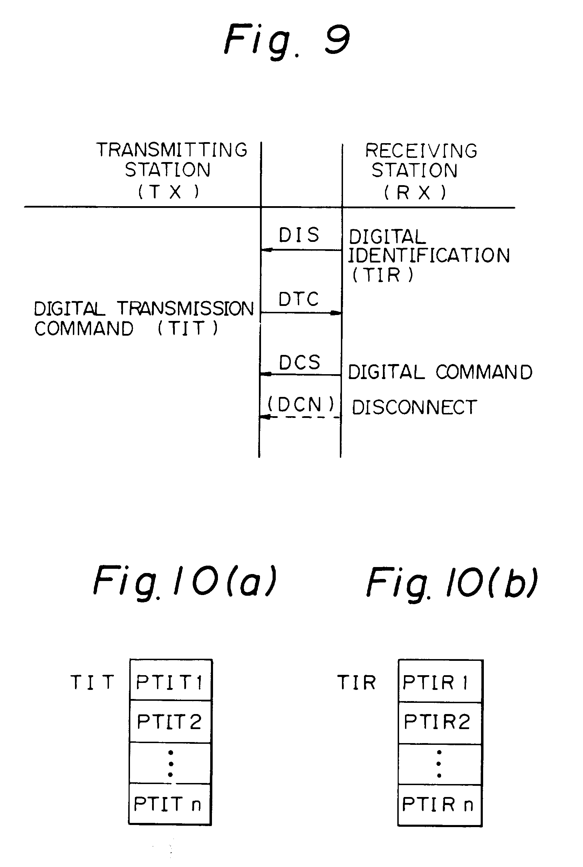

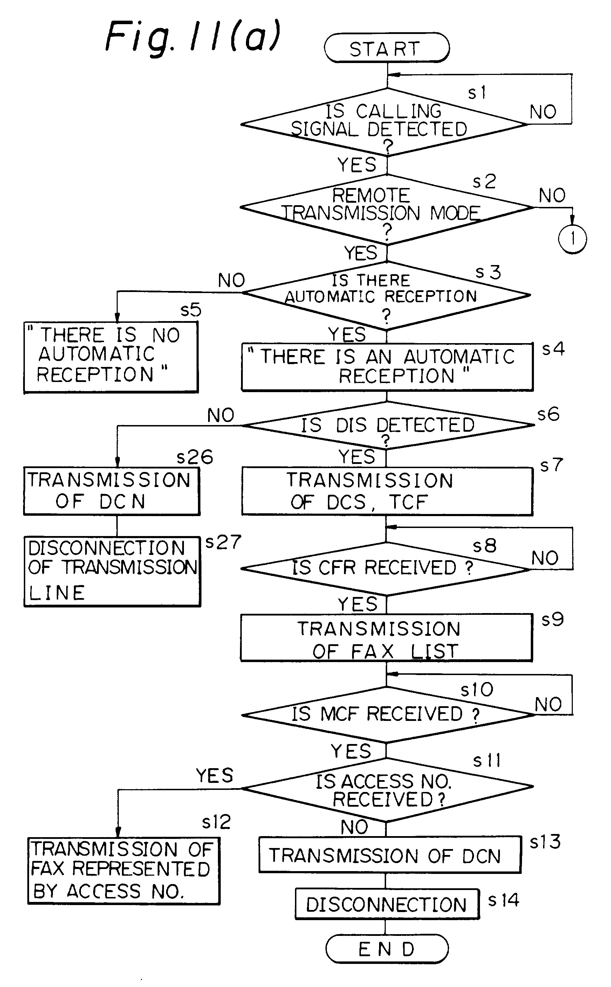

Fig. 9 shows an example of a polling (request of transmission) procedure. In the transmitting station (TX), n polling permission Nos., PTIT1, PTIT2, ..., PTITn, are registered in advance. In the receiving station (RX), n polling permission Nos., PTIR1, PTIR2, ..., PTIRn, are registered in advance. In the receiving station RX, the n polling permission Nos. are coded into the form of polling permission codes TIR. In the transmitting station TX, the n polling permission Nos. are coded into the form of polling permission codes TIT (see Figs. 10 (a) and 10 (b)).

In this example shown in Fig. 9, a digital identification (DIS) signal affixed with the polling permission code TIR is sent first from the receiving station RX to the transmitting station TX. Subsequently, a digital transmission command (DTC) signal affixed with the polling permission code TIT is sent out from the transmitting station TX to the receiving station RX. The receiving station RX detects this polling permission code TIT from the digital transmission command (DTC) signal, and collates this polling permission code TIT with the polling permission code TIR registered in the receiving station RX. If they coincide with each other, the receiving station RX accepts polling and sends out a digital command (DCS) signal to the transmitting station TX. If they do not coincide with each other, the receiving station RX sends out a disconnect (DCN) signal, and disconnects the communication line.

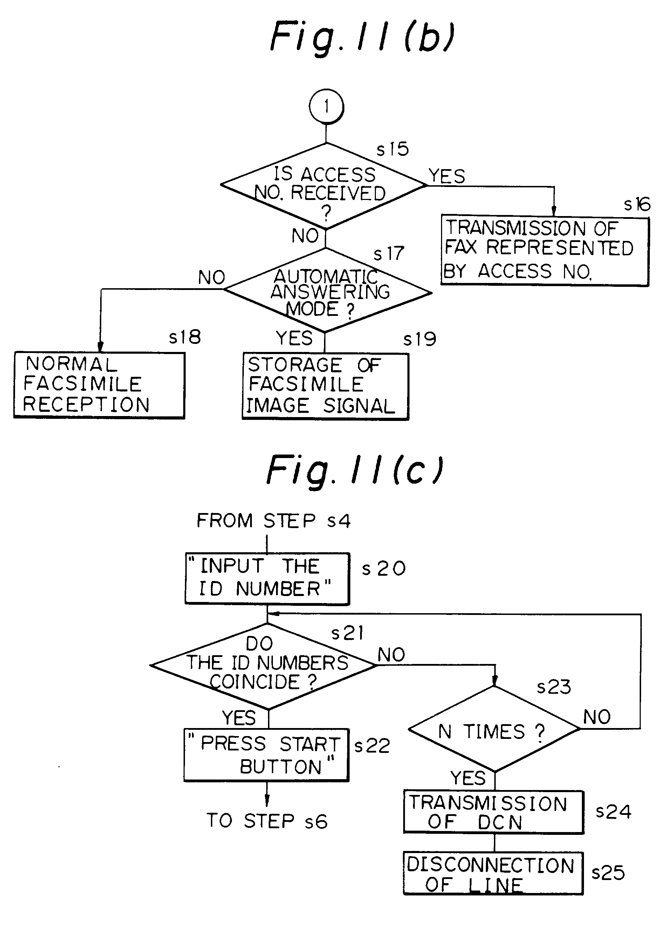

Fig. 11 (a) is a flowchart for explaining the operation of a facsimile image signal transmission from the automatic answering station 1. If a calling signal is detected in Step S1, it is determined in step S2 whether or not the terminal 1 should operate in a remote transmission mode of the facsimile image information. This determination is made by the detection of a dial tone multi-frequency signal (DTMF), as stated above. Detection of a specific dial tone signal in this step means that the facsimile telegraph from which the calling signal is transmitted through the public transmission circuit network 2 is a remote station 1B. Subsequently, it is judged in step S3 whether or not any facsimile image signal from the calling station 1A has been received. If already received, an audio response message, such as "there is a facsimile reception" is sent to the remote station 1B in step S4. If not, an audio response message, such as "there is no facsimile reception" is sent out to the remote station 1B in step S5.

In step S6, once a digital identification (DIS) signal is detected and polling from the remote station 1B is accepted, a digital command (DCS) signal and a training check (TCF) signal are sent out to the remote station 1B in step n7. If a confirmation to receive (CFR) signal is received in step n8, Fax Reception List F1 shown in Fig. 3, for example, is sent out to the remote station 1B in step n9.

If a message confirmation (MCF) signal is received in step S10, after the list F1 has been sent out, it is judged in step S11 whether or not a signal for designating an access No. of the list F1 is received. If it is received, the facsimile image information represented by this No. is sent out in step S12. If not, a disconnect (DCN) signal is sent out to disconnect the transmission circuit in steps S13 and S14.

If the specific dial tone signal is not detected in step S2, the process goes to step S15 (Fig. 11 (b)), where it is judged whether or not a signal representing an access No. of the list F1 is received. If it is received, the facsimile image signal corresponding to the access No. is sent out in step S16.

If any signal representing an access No. is not received in step S15, normal facsimile image signal reception operation is performed. That is, the facsimile image information received is printed out when the station 1 is not in the automatic recording mode. On the contrary, if the station 1 has been set to the automatic answering mode, the facsimile image signal received is stored in the image signal storage unit 7 in step S19.

Prior to step S6, collation of the identification number may be performed to judge whether or not the remote station 1B is a previously registered station. More specifically, after the completion of step S4 the process may go to step S20 (see Fig. 11 (c)), and an audio response message, such as "Please input the identification number", may be sent out. And in step S21, it is judged whether or not the identification number received coincides with the previously registered one. If they are coincided, an audio response message, such as "Please press the start button", may be sent out in step S22. Thereafter, the process returns to step S6.

When the times of disagreement of the identification numbers reach a predetermined number N, the disconnect (DCN) signal is sent out to disconnect the transmission circuit line in steps S23, S24 and S25. If no digital identification signal (DIS) signal is detected in step S6, the disconnect (DCN) signal is also sent out to disconnect the transmission circuit in steps S26 and S27.

Thus, inthe facsimile telegraph of this invention (automatic answering station 1 of this embodiment), facsimile image signals received from a plurality of other facsimile telegraphs can be automatically stored together with their address Nos. in the automatic answering mode, and presence or absence of the facsimile image information stored in this mode can be confirmed at other remote facsimile telegraphs by an audio response message. Furthermore, any desired facsimile image information can be chosen, which makes the facsimile telegraph convenient.

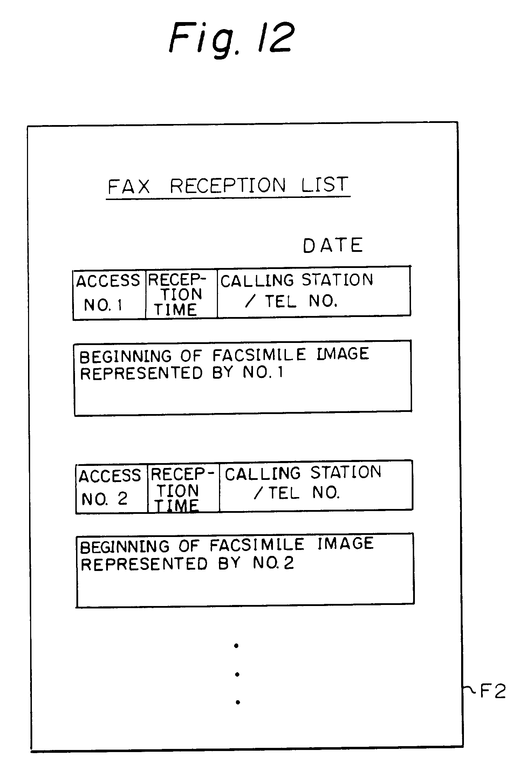

Fig. 12 shows another example of Fax Reception List F₂. In the list F2 the reception time, the name and the telephone No. of each calling station and the beginning of each facsimile image are listed together with the access No. This enables the operator of the remote station 1B to recognize a part of each of the facsimile images upon receipt of this list F2, thereby facilitating a choice of the facsimile images.

In the above-described flowchart, the automatic answering station 1 is adapted to send out the Fax Reception List to the remote station 1B first, then send out selected facsimile image information. However, the station 1 may also be constructed such that it sends out all the facsimile image information received in the beginning. Alternatively, it may be arranged such that only the Fax Reception List is sent out.

## Claims

1. An automatic answering station comprising: image information storage means (7) for storing image information transmitted from each of a plurality of calling stations (1A) through a transmission network (2); identification data storage means (10) for storing identification data assigned to each of a plurality of remote stations (1B); comparing means (5) for comparing identification data transmitted from one of a plurality of said remote stations (1B) with said stored identification data; and output means (4, 6, 17) for outputting said stored image information to said one of a plurality of said remote stations (1B) when said comparing means (5) detects that identification data received from said one of said plurality of remote stations (1B) matches identification data stored in said identification data storage means (10);
characterised by informing means (4,5,6,17) for informing one of said plurality of remote stations (1B) of the presence of stored image information by transmitting a predetermined signal when a predetermined calling signal is received from said one of a plurality of said remote station (1B) and a list storage means (9) for storing a list of transmitted data from a plurality of said calling stations (1A) and wherein said output means (4, 6, 17) outputs said list to said one of a plurality of remote stations (1B) when said one of a plurality of remote stations (1B) transmits a predetermined signal.

2. An automatic answering station according to claim 1, wherein said image information storage means (7) is partitioned into a plurality of areas for storing said image information transmitted from one of a plurality of said calling stations (1A) in one of said partitioned areas, and said output means (4,6,17) outputs said image information stored in one of said partitioned areas to said one of a plurality of said remote stations (1B) when said one of a plurality of remote stations (1B) transmits a predetermined signal.

3. An automatic answering station according to any one of the preceding claims wherein said identification data storage means (10) includes a ROM (10) for storing said identification data, and said image information storage means (7) includes a RAM (7) for storing said image information.

4. An automatic answering station according to any one of claims 1 to 3 wherein said informing means (4,5,6,17) includes an audio synthesising circuit (33) for producing an audio signal representing the presence or an absence of stored image information.

5. An automatic answering station according to any one of claims 1 to 4 wherein said automatic answering station further comprises an instruction means (5,17) for instructing said one of a plurality of said remote stations (1B) to transmit said identification data.

6. An automatic answering station according to claim 5 wherein said instruction means (5,17) includes an audio synthesising circuit (33) for producing an audio signal for instructing transmission of said identification data.

7. An automatic answering station according to any one of claims 1 to 6 wherein said automatic answering station (1) comprises a facsimile, each said calling station (1A) comprises a facsimile, and each said remote station (1B) comprises a facsimile.

## Patentansprüche

1. Automatische Antwortstation mit: einer Bildinformation-Speichereinrichtung (7) zum Einspeichern von Bildinformation, wie sie von jeder von mehreren rufenden Stationen (1A) über ein Übertragungsnetz (2) übertragen wird; einer Kennungsdaten-Speichereinrichtung (10) zum Speichern von Kennungsdaten, wie sie jeder von mehrern entfernten Stationen (1B) zugeordnet sind; einer Vergleichseinrichtung (5) zum Vergleichen der von einer der mehreren entfernten Stationen (1B) gesendeten Kennungsdaten mit den abgespeicherten Kennungsdaten; und einer Ausgabeeinrichtung (4, 6, 17) zum Ausgeben der gespeicherten Bildinformation an eine der mehreren entfernten Stationen (1B), wenn die Vergleichseinrichtung (5) erkennt, daß die von der einen der mehreren entfernten Stationen (1B) empfangenen Kennungsdaten mit den in der Kennungsdaten-Speichereinrichtung (10) gespeicherten Kennungsdaten übereinstimmen;
**gekennzeichnet durch** eine Informationseinrichtung (4, 5, 6, 17) zum Informieren einer der mehreren entfernten Stationen (1B) über das Vorliegen abgespeicherter Bildinformation durch Übertragen eines vorgegebenen Signals, wenn ein vorgegebenes Rufsignal von einer der mehreren entfernten Stationen (1B) empfangen wird, und durch eine Listenspeichereinrichtung (9) zum Speichern einer Liste gesendeter Daten von mehreren der rufenden Stationen (1A), wobei die Ausgabeeinrichtung (4, 6, 17) die Liste an die eine der mehreren entfernten Stationen (1B) ausgibt, wenn diese eine der mehreren entfernten Stationen (1B) ein vorgegebenes Signal sendet.

2. Automatische Antwortstation nach Anspruch 1, bei der die Bildinformation-Speichereinrichtung (7) in mehrere Bereiche unterteilt ist, um die von einer der mehreren rufenden Stationen (1A) gesendete Bildinformation in einen der unterteilten Bereiche einzuspeichern, und die Ausgabeeinrichtung (4, 6, 17) die Bildinformation, wie sie in einem der unterteilten Bereiche gespeichert ist, an die eine der mehreren entfernten Stationen (1B) ausgibt, wenn diese eine der mehreren entfernten Stationen (1B) ein vorgegebenes Signal sendet.

3. Automatische Antwortstation nach einem der vorstehenden Ansprüche, bei dem die Kennungsdaten-Speichereinrichtung (10) einen ROM (10) zum Speichern der Kennungsdaten aufweist und die Bildinformation-Speichereinrichtung (7) einen RAM (7) zum Speichern der Bildinformation aufweist.

4. Automatische Antwortstation nach einem der Ansprüche 1 bis 3, bei der die Informationseinrichtung (4, 5, 6, 17) eine Audiosyntheseschaltung (33) aufweist, um ein Audiosignal zu erzeugen, daß das Vorliegen oder Fehlen gespeicherter Bildinformation anzeigt.

5. Automatische Antwortstation nach einem der Ansprüche 1 bis 4, die ferner eine Anweisungseinrichtung (5, 17) aufweist, um die eine der mehreren entfernten Stationen (1B) anzuweisen, die Kennungsdaten zu senden.

6. Automatische Antwortstation nach Anspruch 5, bei der die Anweisungseinrichtung (5, 17) eine Audiosyntheseschaltung (33) zum Erzeugen eines Audiosignals zum Anweisen des Sendens der Kennungsdaten aufweist.

7. Automatische Antwortstation nach einem der Ansprüche 1 bis 6, wobei diese automatische Antwortstation (1) ein Faksimilegerät aufweist, jede der rufenden Stationen (1A) ein Faksimilegerät aufweist und jede der entfernten Stationen (1B) ein Faksimilegerät aufweist.

## Revendications

1. Station à réponse automatique comprenant : un moyen de stockage d'informations d'image (7) pour stocker des informations d'image transmises depuis chaque. station de plusieurs stations appelantes (1A) par l'intermédiaire d'un réseau de transmission (2) ; un moyen de stockage de données d'identification (10) pour stocker des données d'identification attribuées à chaque station de plusieurs stations distantes (1B) ; un moyen de comparaison (5) pour comparer les données d'identification transmises depuis une desdites plusieurs stations distantes (1B) auxdites données d'identification stockées ; et un moyen de sortie (4, 6, 17) pour sortir lesdites informations d'image stockées vers ladite une desdites plusieurs stations distantes (1B) lorsque ledit moyen de comparaison (5) détecte que les données d'identification reçues depuis ladite une desdites plusieurs stations distantes (1B) concordent avec les données d'identification stockées dans ledit moyen de stockage de données d'identification (10) ;
caractérisé par un moyen d'information (4, 5, 6, 17) pour informer une desdites plusieurs stations distantes (1B) de la présence de données d'image stockées en transmettant un signal prédéterminé quand un signal d'appel prédéterminé est reçu depuis ladite une desdites plusieurs stations distantes (1B) et un moyen de stockage de liste (9) pour stocker une liste de données transmises en provenance desdites plusieurs stations appelantes (1A) et dans lequel ledit moyen de sortie (4, 6, 17) sort ladite liste vers ladite une desdites plusieurs stations distantes (1B) lorsque ladite une desdites plusieurs stations distantes (1B) transmet un signal prédéterminé.

2. Station à réponse automatique selon la revendication 1, dans laquelle ledit moyen de stockage d'informations d'image (7) est partitionné en plusieurs zones pour stocker lesdites informations d'image transmises depuis une desdites plusieurs stations appelantes (1A) dans une desdites zones partitionnées, et dans laquelle ledit moyen de sortie (4, 6, 17) sort lesdites informations d'image stockées dans une desdites zones partitionnées vers ladite une desdites plusieurs stations distantes (1B) lorsque ladite une desdites plusieurs stations distantes (1B) transmet un signal prédéterminé.

3. Station à réponse automatique selon l'une quelconque des revendications précédentes, dans laquelle ledit moyen de stockage de données d'identification (10) comprend une ROM (10) pour stocker lesdites données d'identification, et dans laquelle ledit moyen de stockage d'informations d'image (7) comprend une RAM (7) pour stocker lesdites informations d'image.

4. Station à réponse automatique selon l'une quelconque des revendications 1 à 3, dans laquelle ledit moyen d'information (4, 5, 6, 17) comprend un circuit de synthèse audio (33) pour produire un signal audio représentant la présence ou l'absence des informations d'image stockées.

5. Station à réponse automatique selon l'une quelconque des revendications 1 à 4, dans laquelle ladite station à réponse automatique comprend, de plus, un moyen d'instruction (5, 17) pour ordonner à ladite une desdites plusieurs stations distantes (1B) de transmettre lesdites données d'identification.

6. Station à réponse automatique selon la revendication 5, dans laquelle ledit moyen d'instruction (5, 17) comprend un circuit de synthèse audio (33) pour produire un signal audio pour ordonner la transmission desdites données d'identification.

7. Station à réponse automatique selon l'une quelconque des revendications 1 à 6, dans laquelle ladite station à réponse automatique (1) comprend un dispositif de télécopie, dans laquelle chaque dite station appelante (1A) comprend un dispositif de télécopie, et dans laquelle chaque station distante (1B) comprend un dispositif de télécopie.
